# FASCICULE DE BREVET EUROPEEN

(11) **EP 2 630 336 B1**
(45) Date de publication et mention de la délivrance du brevet: **11.04.2018**
(21) Numéro de dépôt: 11785734.2
(22) Date de dépôt: 20.10.2011
(51) Int. Cl.: F01D 11/08, F01D 11/18, F01D 25/24, F02C 3/08, F04D 29/42

(54) **PROCEDE D'ATTACHE DE COUVERCLE DE COMPRESSEUR CENTRIFUGE DE TURBOMACHINE, COUVERCLE DE COMPRESSEUR DE MISE EN OEUVRE ET ASSEMBLAGE DE COMPRESSEUR MUNI D'UN TEL COUVERCLE**
METHODE ZUM BEFESTIGEN EINER ABDECKUNG FÜR EINEN RADIALVERDICHTER, ABDECKUNG FÜR EINEN DURCHFÜHRENDEN VERDICHTER UND VERDICHTERANORDNUNG MIT SOLCHER ABDECKUNG
METHOD FOR ATTACHING A CENTRIFUGAL COMPRESSOR COVER, COVER FOR AN IMPLEMENTING COMPRESSOR AND ASSEMBLY COMPRISING SUCH A COVER

(30) Priorité: 21.10.2010 FR 1058587
(43) Date de publication de la demande: 28.08.2013
(73) Titulaire: Safran Helicopter Engines, 64510 Bordes (FR)
(72) Inventeur: RENARD, Béatrice, Marie, F-64260 Lys (FR); BILLOTEY, Geoffroy, Louis, Henri, Marie, F-38500 Voiron (FR)
(74) Mandataire: Gevers & Orès
(86) Numéro de dépôt international: PCT/FR2011/052448
(87) Numéro de publication internationale: WO 2012/052687

(56) Documents cités:
- EP-A1- 2 026 006
- EP-A2- 1 903 185
- US-A- 4 264 271

## Description

### DOMAINE DE L'INVENTION

L'invention concerne un procédé d'attache de couvercle de compresseur centrifuge de turbomachine, un couvercle apte à mettre en oeuvre ce procédé ainsi qu'un assemblage de compresseur centrifuge muni d'un tel couvercle. Une turbomachine peut équiper tout type d'aéronef, en particulier un hélicoptère ou un avion. La configuration est dite optimisée en ce sens qu'elle induit un jeu minimisé et sensiblement constant entre le couvercle et le rouet dans toutes les phases du vol.

Les attaches de couvercle de rouet sont configurées sous forme de diaphragmes souples pour pouvoir adapter le positionnement du couvercle pendant le fonctionnement du compresseur centrifuge. Le positionnement classiquement recherché vise à maintenir un jeu minimal entre le couvercle et les ailettes du rouet dans toutes les phases de vol, que ce soit pendant les régimes transitoires de fonctionnement du compresseur ou pendant les régimes stabilisés intermédiaires.

Typiquement, la température et la pression de l'écoulement d'air dans un rouet de compresseur centrifuge augmente sensiblement de 30 à 40 % du bord d'attaque au bord de fuite du rouet. L'effet de ce différentiel est d'incliner les portions radiales des ailettes proches du bord de fuite vers l'amont, et donc de rapprocher le rouet du couvercle progressivement, d'amont en aval. De plus, une augmentation de température supplémentaire dans la région de ces portions radiales de bord de fuite provient de la chaleur irradiée par la turbine de la turbomachine. Cet apport additionnel renforce également l'inclinaison des ailettes sur le couvercle du compresseur.

Cette inclinaison est par ailleurs également favorisée par les forces centrifuges qui résultent de la vitesse de rotation élevée du rouet. Ces forces centrifuges induisent également une dilatation radiale, en particulier pour la portion axiale du couvercle, du côté de son bord d'attaque.

Dans ces conditions, le jeu entre le couvercle et le rouet du compresseur centrifuge présente un différentiel qui varie localement le long du rouet entre le bord d'attaque et le bord de fuite et qui varie selon la phase de fonctionnement du compresseur. Or le jeu entre le couvercle et le rouet est un facteur essentiel en termes de rendement du compresseur centrifuge. Afin d'améliorer ce rendement, un jeu couvercle/rouet aussi constant et faible que possible - sans risque de contact prolongé - est recherché.

### ÉTAT DE LA TECHNIQUE

De manière générale, une attache en forme de diaphragme annulaire vient fixer le couvercle par bridage sur un support annulaire. Plusieurs possibilités se présentent pour positionner l'attache annulaire sur le couvercle et étudier le comportement du jeu couvercle/rouet selon ce positionnement. Cette attache peut prendre naissance :
- en bord d'attaque, situé du côté amont en entrée axiale des ailettes du rouet ;
- en bord de fuite, situé en extrémité aval du côté des sorties radiales des ailettes, ou
- dans le coude du couvercle formé par la courbure concave du couvercle entre les bords amont et aval, en particulier à mi-chemin de ces bords.

Une liaison en bord d'attaque ne permet pas de prélèvement d'air dans le couvercle. En effet, l'étanchéité entre l'air prélevé et celui qui s'écoule entre le couvercle et le diffuseur n'est pas assuré, ce qui provoque des recirculations. Or, un prélèvement d'air est en général prévu comme source de puissance pour les équipements de la turbomachine ou de l'aéronef.

Une liaison en bord de fuite ne permet pas au couvercle de suivre le déplacement du rouet, en particulier dans sa partie radiale c'est-à-dire là où le déplacement est le plus important : le jeu couvercle/rouet est dimensionné pour être à une valeur donnée à la puissance maximale de décollage, en abrégé PMD, de la turbomachine. Mais ce jeu n'est pas optimisé dans les régimes intermédiaires stabilisés et dans les régimes transitoires.

Une liaison double, à la fois en bord de fuite et dans le coude comme décrit dans le document de brevet EP 1 167 722, ou en bord d'attaque et dans le coude, tel qu'évoqué dans le brevet US 5 555 721, conduisent aux mêmes conclusions sur la problématique du déplacement du couvercle par rapport à l'inclinaison des ailettes du rouet.

Une liaison unique dans le coude du couvercle ne permet pas de lever les inconvénients des liaisons doubles ou de la liaison en bord de fuite car le comportement du couvercle ne suit pas le déplacement des ailettes, en particulier le déplacement vers l'amont, pour limiter le réglage des jeux.

Une architecture à liaison unique dans le coude est décrite par exemple dans le document de brevet US 4 264 271. L'attache de couvercle est ici une extension en forme de couronne radiale (50) fixée à un support annulaire (42) par des brides. La couronne peut se déformer sous l'effet de la pression et de la température. Cette déformation permet de déplacer le couvercle concave de manière à conserver une même distance avec les ailettes du rouet.

Cependant, le déplacement radial de la jonction (56) est fortement limité par la couronne (50) qui travaille en compression. Ainsi ce type d'architecture limite la rotation de la méridienne du couvercle initié naturellement par le gradient de température présent sur le couvercle.
Le document EP 2 026 006 A1 décrit une turbomachine comprenant un compresseur centrifuge.

### EXPOSÉ DE L'INVENTION

La présente invention vise au contraire à permettre un déplacement du couvercle de sorte que le jeu entre le couvercle et les ailettes du rouet reste le plus faible possible dans une large gamme de déformation du rouet. Pour ce faire, l'invention propose une configuration d'attache de type en milieu de couvercle présentant une portion particulière.

L'invention se rapporte à un couvercle de compresseur centrifuge de turbomachine tel que défini à la revendication 1, le couvercle présentant notamment une enveloppe concave ayant une face interne agencée à distance du compresseur équipé d'un rouet muni d'ailettes par une attache ayant une extrémité de jonction formée sensiblement en milieu de l'enveloppe et une autre extrémité fixée sur un carter de la turbomachine. Une telle attache comporte un diaphragme axisymétrique de configuration globalement tronconique qui présente un profil de bras couplé à l'extrémité de fixation au carter par une articulation à double coude d'angles droit et obtus au repos, cette articulation étant agencée plus près de l'extrémité de fixation que de l'extrémité de jonction à l'enveloppe. La distance entre la face intérieure de l'enveloppe et des bords supérieurs des ailettes est ainsi apte à être maintenue constante en fonctionnement et réglée avec un réglage de jeux minimal aux régimes intermédiaires et transitoires. L'articulation à double coude est formée en position de repos par une couronne radiale d'articulation couplée, d'une part, à la liaison annulaire axiale selon un coude d'angle sensiblement droit et, d'autre part, au bras tronconique selon un coude d'angle obtus.

Selon des modes de réalisation particuliers :
- le diaphragme comporte une liaison annulaire axiale entre une couronne de fixation radiale et l'articulation à double coude ;
- avantageusement, le profil du bras peut être sensiblement rectiligne au repos et d'épaisseur sensiblement évolutive en augmentant vers l'extrémité de jonction;
- le bras possède en moyenne une épaisseur sensiblement plus faible que celle de l'enveloppe du couvercle.

L'invention concerne également un assemblage d'un couvercle tel que décrit ci-dessus et d'un compresseur centrifuge de turbomachine. Dans cet assemblage, le couvercle est configuré pour, d'une part, rester à une distance constante du compresseur et, d'autre part, se fixer au carter de la turbomachine.

### BRÈVE DESCRIPTION DES FIGURES

D'autres avantages et caractéristiques de l'invention pourront apparaître lors de la description détaillée qui suit, en référence aux figures annexées qui représentent, respectivement :
- la figure 1, une vue longitudinale d'une turbomachine équipée d'un couvercle de compresseur centrifuge selon l'invention ;
- la figure 2, une vue en coupe longitudinale partielle du couvercle du compresseur centrifuge de la figure 1 en position de repos ;
- la figure 3, une vue frontale partielle du couvercle et du compresseur selon le plan III-III de la figure 1, et
- la figure 4, la vue en coupe selon la figure 2 lorsque le compresseur est en fonctionnement, mettant en évidence les positions du couvercle et du compresseur en fonctionnement par rapport à celles au repos de la figure 2 qui apparaissent en traits pointillés.

### DESCRIPTION DETAILLÉE

Dans la description, les termes de type « axial », « axisymétrique », « amont » et « aval » se rapportent à des localisations le long ou de révolution autour de l'axe central X'X de rotation de la turbomachine, selon le sens de cet axe central. Les termes de type « radial » se rapportent à des localisations orthogonales à cet axe central. Par ailleurs, les éléments ayant les mêmes signes de référence sur différentes figures se rapportent à des éléments identiques.

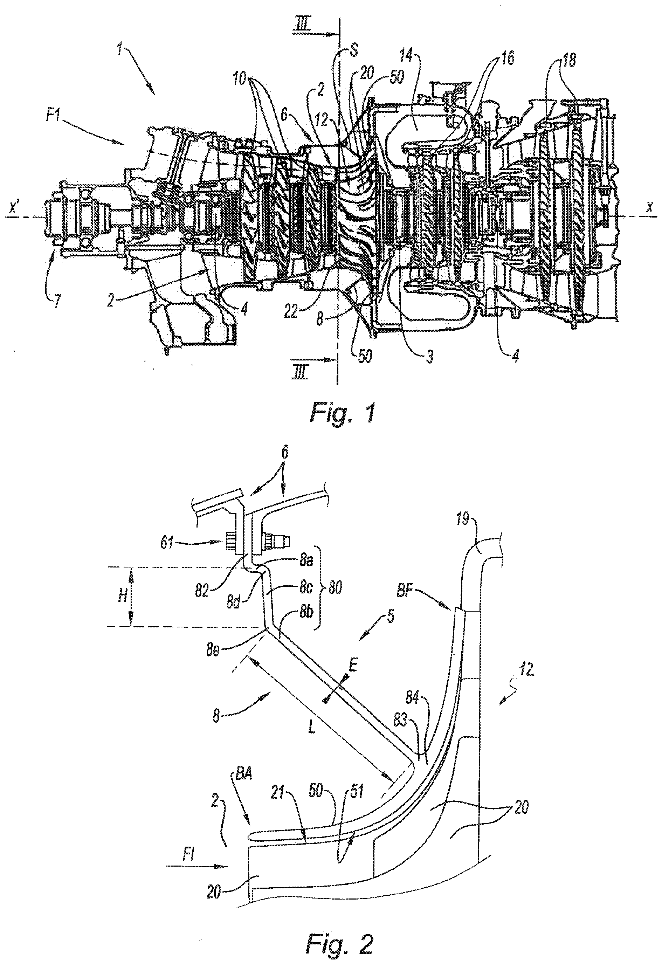

En référence à la figure 1, un exemple de turbomachine 1 d'aéronef comporte principalement, agencés d'amont en aval autour de l'axe central de rotation X'X, un compresseur axial 10 à trois étages, un compresseur centrifuge 12, des chambres de combustion 14, une turbine liée 16 à deux étages et une turbine libre 18 également à deux étages.

Le flux d'air F1 est comprimé par la traversée des compresseurs 10 et 12 dans des conduits 2, puis mélangé au carburant dans les chambres 14 pour fournir par combustion de l'énergie cinétique aux turbines 16 et 18. Les étages de la turbine 16 entraînent les compresseurs 10 et 12 via un arbre de transmission 3 et la turbine libre 18 transmet de la puissance via un arbre traversant 4 aux équipements de l'aéronef (alternateurs pompes, climatisation).

La turbomachine est protégée par un carter 6. Dans l'exemple, la turbomachine est un turbomoteur et l'aéronef un hélicoptère. Les turbines libres entraînent les équipements, en particulier le rotor de l'hélice, via une boîte de transmission de puissance 7 équipée des réducteurs appropriés.

Le compresseur centrifuge 12 est équipé d'ailettes axiales 20 formées sur un rouet 22 pour conduire le flux d'air F1 et le comprimer lorsque le compresseur tourne à vitesse élevée. Comme représenté de manière plus précise par la figure 2, le conduit 2 dans lequel s'écoule le flux F1 est limité au niveau du compresseur centrifuge par les ailettes 20 et la face intérieure 51 d'une enveloppe concave 50. Cette enveloppe 50 est maintenue par un prolongement formant une attache 8 fixée au carter 6 par des brides 61. L'enveloppe 50 et l'attache 8 forment le couvercle 5. Le flux d'air comprimé F1 est ensuite entraîné vers les chambres de combustion 14 via des diffuseurs 19.

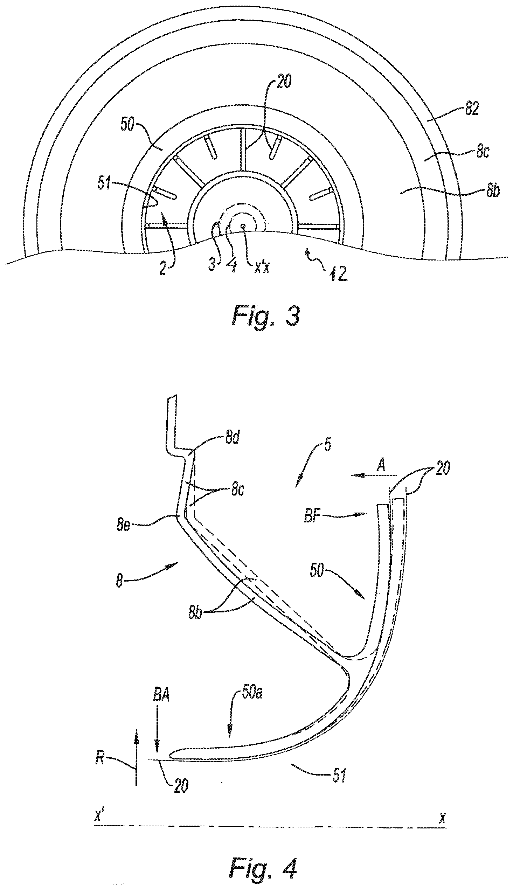

L'attache 8 du couvercle 5 prend naissance sensiblement au milieu de la face concave du couvercle, par exemple, comme illustré, au point d'extrémité de jonction 83 où la courbure du couvercle est la plus forte. L'attache 8 est alors sensiblement radiale à l'enveloppe 50 au regard de la courbure du couvercle au point de contact. La configuration de cette attache 8 est illustrée plus particulièrement par les vues en coupe partielle et frontale du couvercle et du compresseur centrifuge des figures 2 et 3. Sur ces figures, apparaissent au moins partiellement les ailettes 20 du rouet, le conduit 2, le compresseur centrifuge 12 et les arbres 3 et 4.

L'enveloppe 50 présente un bord d'attaque BA en amont, sensiblement axial et un bord de fuite BF en aval sensiblement radial. L'attache 8 est composée d'une extrémité, formant une couronne radiale 82 fixée au carter par des brides (cf. figure 1), et d'un diaphragme 80 axisymétrique, de configuration globalement tronconique. La couronne 82 est agencée sensiblement en regard radial de l'extrémité du bord d'attaque BA de l'enveloppe 50. Le diaphragme 80 vient en extrémité 83 s'intégrer à l'enveloppe 50 avec un renfort mécanique approprié 84.

Le diaphragme 80 se compose à son tour d'une liaison annulaire axiale 8a couplée à un bras tronconique rectiligne 8b, via une articulation doublement coudée. La longueur ajustable de la liaison axiale 8a fournit avantageusement un degré de liberté d'adaptation à la position imposée par les brides de fixation 61.

L'articulation est formée, telle qu'illustrée en position de repos, par l'assemblage d'une couronne radiale 8c d'articulation avec, d'une part, la liaison annulaire axiale 8a - selon un coude 8d d'angle sensiblement droit - et, d'autre part, le bras rectiligne 8b - selon un coude 8e d'angle obtus - d'environ 140° dans l'exemple.

Dans l'exemple, le bras 8b présente avantageusement une épaisseur « E » sensiblement évolutive qui augmente entre le coude 8e et son extrémité 83. De plus, cette épaisseur est en moyenne plus faible, par exemple de 1,5 à 3 fois plus faible que celle de l'enveloppe 50. Une telle épaisseur fine de bras permet de diminuer la consommation de jeu entre la face interne 51 de l'enveloppe 50 et les bords supérieurs 21 des ailettes 20 pendant les régimes stabilisés de vol, à savoir les régimes intermédiaires, ainsi que la consommation du jeu dans les régimes transitoires. Cependant, une épaisseur de bras trop faible peut augmenter les consommations de jeu pendant les régimes transitoires. Un compromis est donc obtenu sur tous les régimes intermédiaires, sans risque de contact sévère entre l'enveloppe 50 et les bords d'ailettes 21, par cette épaisseur de bras intermédiaire pouvant également être évolutive.

La variation de la hauteur H de la couronne radiale d'articulation 8c conduit au même compromis : la hauteur H est augmentée pour réduire la consommation de jeu sur tous les régimes stabilisés, mais cette augmentation est limitée pour sécuriser le risque de contact entre le couvercle et les ailettes. Ainsi, augmenter la hauteur H de 25% revient à diminuer l'épaisseur de l'enveloppe 50 de 20%.

La figure 4 illustre en coupe la position du couvercle 5 (en traits pleins) lorsque le compresseur et donc les ailettes 20 sont en fonctionnement, ainsi que la position du couvercle (en traits pointillés) et des ailettes 20 du compresseur en repos selon la figure 2. En fonctionnement, le carter et la fixation du couvercle subissent également les effets de pression et de température. Afin de bien mettre en évidence les effets de la solution selon l'invention, en particulier par la souplesse de l'attache 8, le carter et la fixation du couvercle ont été représentés sur la figure 4 selon la même position que celle de repos de la figure 2.

En fonctionnement, sous l'effet de la pression et de la température, les ailettes 20 se déplacent vers l'amont (flèche A) du côté de son bord de fuite BF, ainsi qu'en extension radiale (flèche R) pour la partie axiale 50a (sensiblement parallèle à l'axe X'X) de l'enveloppe 50 du côté de son bord d'attaque BA.

Grâce à la flexion de la couronne radiale 8c et du bras 8b de l'attache 8 - en d'autres termes grâce à la variation des angles d'articulation des coudes 8d et 8e - la face intérieure 51 de l'enveloppe 50 suit les déplacements subis par les ailettes 20. L'épaisseur « E », dans sa moyenne et dans sa variation jusqu'à la jonction 83, et la longueur « L » du bras 8b peuvent être avantageusement réglées pour permettre également une flexion appropriée du bras en fonction de la configuration du compresseur. Le comportement du couvercle restant très proche de celui du rouet, le réglage de jeu est ainsi ajusté au minimum.

Par rapport à une configuration antérieure de type à attache directe, sans articulation, il en résulte un réglage permettant des jeux de montage fortement réduits et optimisés aux régimes intermédiaires et transitoires. Par exemple, en bord de fuite, le jeu au montage peut être réduit de 120%, ce qui induit une réduction de jeu de 54% dans un régime intermédiaire qui nécessite des performances moteurs optimales.

L'invention n'est pas limitée à l'exemple de réalisation décrit et représenté. Il est par exemple possible de prévoir l'articulation à double coude selon une position plus avancée vers le centre de l'attache, tout en restant de préférence plus près de la couronne de fixation au carter que du couvercle. Plusieurs articulations peuvent également être prévues autour de couronne radiale de dimensions adaptées. Par ailleurs, l'angle obtus du bras tronconique au repos peut varier de préférence dans une fourchette comprise entre 120 et 150°.

Il est également possible de prévoir un bras légèrement courbé, concave ou convexe, ou encore une couronne radiale également légèrement concave ou convexe. Les caractéristiques dimensionnelles du bras 8b, à savoir son épaisseur « E », dans son évolution pas nécessairement linéaire jusqu'à la jonction, et sa longueur « L », par exemple 3 à 4 fois plus élevée que celle du reste de l'attache, peuvent être ajustées en complément des caractéristiques de l'articulation à double coude pour régler la flexion appropriée de l'ensemble de l'attache.

De plus, d'autres types de portion élastiquement déformable peuvent être prévus : utilisation de matériaux différents pour la portion et le bras, portion présentant des ondulations et/ou en matériau ajouré, toute autre forme et autre traitement adapté.

## Revendications

1. Couvercle (5) de compresseur centrifuge (12) de turbomachine, le couvercle (5) présentant une enveloppe concave (50) ayant une face intérieure (51), le couvercle (5) comprenant une attache (8) comportant un diaphragme axisymétrique (80) de configuration globalement tronconique, destinée à maintenir l'enveloppe (50) à distance d'un rouet (22) du compresseur, ladite attache (8) ayant une première extrémité (83) formée sensiblement en milieu d'enveloppe (50) et une deuxième extrémité formée par une couronne radiale (82) et destinée à être fixée à un carter (6) de la turbomachine (1), le couvercle (5) étant **caractérisé en ce que** le diaphragme axisymétrique (80) de configuration globalement tronconique présente un profil de bras (8b) couplé à la deuxième extrémité (82) par une articulation à double coude (8c, 8d, 8e) d'angles droit et obtus au repos, cette articulation (8c, 8d, 8e) étant agencée plus près de la deuxième extrémité (82) que de la première extrémité (83), et **en ce que** l'articulation à double coude (8c, 8d, 8e) est formée en position de repos par une couronne radiale d'articulation (8c) couplée, d'une part, à une liaison annulaire axiale (8a) située entre la couronne radiale de fixation (82) et l'articulation à double coude (8c, 8d, 8e), selon un coude d'angle sensiblement droit, et, d'autre part au bras tronconique rectiligne (8b), selon un coude d'angle obtus.

2. Couvercle de compresseur centrifuge selon la revendication 1, dans lequel le bras (8b) est de profil sensiblement rectiligne au repos et d'épaisseur (E) évolutive en augmentant vers l'extrémité de jonction (83).

3. Couvercle de compresseur centrifuge selon l'une des revendications 1 à 2, dans lequel le bras (8b) possède en moyenne une épaisseur (E) sensiblement plus faible que celle de l'enveloppe du couvercle (50).

4. Couvercle de compresseur centrifuge selon l'une des revendications 1 à 3, dans lequel la portion déformable (8c, 8d, 8e) est agencée à proximité de la fixation de la liaison.

5. Couvercle de compresseur centrifuge selon l'une des revendications 1 à 4, dans lequel la liaison est jointe à l'enveloppe (50) selon une configuration sensiblement radiale au regard de la courbure de l'enveloppe (50) à la jonction (83).

6. Assemblage d'un couvercle et d'un compresseur centrifuge de turbomachine, le couvercle (5) étant configuré selon l'une quelconque des revendications 1 à 5 pour, d'une part, rester à une distance constante du compresseur (12) en fonctionnement et, d'autre part, se fixer à un carter (6) de la turbomachine (1).

## Patentansprüche

1. Abdeckung (5) eines Zentrifugalkompressors (12) für eine Turbomaschine, wobei die Abdeckung (5) eine konkave Schale (50) aufweist, die eine Innenfläche (51) hat, wobei die Abdeckung (5) eine Befestigung (8) umfasst, die eine axialsymmetrische Membran (80) mit einem im Wesentlichen kegelstumpfförmigen Aufbau umfasst, die dazu bestimmt ist, die Schale (50) in einem Abstand von einem Laufrad (22) des Kompressors zu halten, wobei die Befestigung (8) ein erstes Ende (83), das m Wesentlichen in der Mitte der Schale (50) ausgebildet ist, und ein zweites Ende hat, das durch einen radialen Kranz (82) gebildet ist und dazu bestimmt ist, an einem Gehäuse (6) der Turbomaschine (1) befestigt zu werden, wobei die Abdeckung (5) **dadurch gekennzeichnet ist, dass** die achsensymmetrische Membran (80) mit einem im Wesentlichen kegelstumpfförmigen Aufbau ein Armprofil (8b) aufweist, das mit dem zweiten Ende (82) durch ein Gelenk mit zwei Biegungen (8c, 8d, 8e) mit rechtem und stumpfen Winkel in Ruhestellung gekoppelt ist, wobei das Gelenk (8c, 8d, 8e) näher an dem zweiten Ende (82) als an dem ersten Ende (83) angeordnet ist, und dass das Gelenk mit zwei Biegungen (8c, 8d, 8e) in der Ruhestellung durch einen radialen Gelenkkranz (8c) gebildet ist, der einerseits mit einer axialen ringförmigen Verbindung (8a), die sich zwischen der radialen Befestigungskrone (82) und dem Gelenk mit zwei Biegungen (8c, 8d, 8e) befindet, entlang einer im Wesentlichen rechtwinkeligen Biegung und andererseits an dem geradlinigen kegelstumpfförmigen Arm (8b) entlang einer stumpfwinkligen Biegung gekoppelt ist.

2. Abdeckung eines Zentrifugalkompressors nach Anspruch 1, wobei der Arm (8b) ein im Wesentlichen geradliniges Profil in der Ruhephase und eine Dicke (E) hat, die zu dem Ende der Verbindung (83) progressiv zunehmend ist.

3. Abdeckung eines Zentrifugalkompressors nach einem der Ansprüche 1 bis 2, wobei der Arm (8b) im Mittel eine Dicke (E) aufweist, die wesentlich geringer ist als diejenige der Schale der Abdeckung (50).

4. Abdeckung eines Zentrifugalkompressors nach einem der Ansprüche 1 bis 3, wobei der verformbare Abschnitt (8c, 8d, 8e) nahe der Befestigung der Verbindung angeordnet ist.

5. Abdeckung eines Zentrifugalkompressors nach einem der Ansprüche 1 bis 4, wobei die Verbindung mit der Schale (50) entlang einer im Wesentlichen radialen Konfiguration bezüglich der Krümmung der Schale (50) an der Verbindung (83) angebracht ist.

6. Anordnung aus einer Abdeckung und einem Zentrifugalkompressor für eine Turbomaschine, wobei die Abdeckung (5) gemäß einem der Ansprüche 1 bis 5 konfiguriert ist, um einerseits in einem konstanten Abstand von dem Kompressor (12) im Betrieb zu bleiben und andererseits an einer Schale (6) der Turbomaschine (1) befestigt zu werden.

## Claims

1. A cover (5) of centrifugal compressor (12) of a turbomachine, the cover (5) having a concave shell (50) having an inner surface (51), the cover (5) comprising an attachment (8) including an axisymmetric diaphragm (80) with generally frustoconical configuration, intended to hold the shell (50) apart from an impeller (22) of the compressor, said attachment (8) having a first end (83) formed substantially in the middle of the shell (50) and a second end formed by a radial ring (82) and intended to be attached to a housing (6) of the turbomachine (1), the cover (5) being **characterised in that** the axisymmetric diaphragm (80) with generally frustoconical configuration has an arm profile (8b) coupled to the second end (82) by a double-elbow joint (8c, 8d, 8e) with right and obtuse angles in rest position, this joint (8c, 8d, 8e) being arranged closer to the second end (82) than the first end (83), and **in that** the double-elbow joint (8c, 8d, 8e) is formed in the rest position with a joint radial ring (8c) coupled, on the one hand, to an axial annular connection (8a) located between the radial fixing ring (82) and the double-elbow joint (8c, 8d, 8e), according to a substantially right angle, and, on the other hand to the rectilinear frustoconical arm (8b), according to an obtuse angle elbow.

2. The cover of centrifugal compressor according to claim 1, wherein the arm (8b) has substantially rectilinear profile in the rest position and variable thickness (E) increasing towards the junction end (83).

3. The cover of centrifugal compressor according to any one of claims 1 to 2, wherein the arm (8b) has at least a thickness (E) substantially smaller than that of the shell of the cover (50).

4. The cover of centrifugal compressor according to any one of claims 1 to 3, wherein the deformable portion (8c, 8d, 8e) is arranged near to the fixing of the connection.

5. The cover of centrifugal compressor according to any one of claims 1 to 4, wherein the connection is attached to the shell (50) according to a substantially radial configuration facing the curvature of the shell (50) at the junction (83).

6. The assembly of a cover and a centrifugal compressor of turbomachine, the cover (5) being configured according to any one of claims 1 to 5 in order, on the one hand, to remain at a constant distance from the compressor (12) in operation and, on the other hand, to be attached to a housing (6) of the turbomachine (1).
